(19) Europäisches Patentamt / European Patent Office / Office européen des brevets

(11) **EP 2 843 893 B1**

(12) **EUROPEAN PATENT SPECIFICATION**

(45) Date of publication and mention
of the grant of the patent:
**10.07.2019 Bulletin 2019/28**

(21) Application number: **12875092.4**

(22) Date of filing: **31.12.2012**

(51) Int Cl.:
*H04L 27/20* (2006.01)      *H04L 27/34* (2006.01)

(86) International application number:
**PCT/CN2012/088004**

(87) International publication number:
**WO 2013/159555 (31.10.2013 Gazette 2013/44)**

(54) **SIGNAL SENDING METHOD, BASE STATION, TERMINAL AND SYSTEM**

SIGNALSENDEVERFAHREN, BASISSTATION, ENDGERÄT UND SYSTEM

PROCÉDÉ D'ENVOI DE SIGNAL, STATION DE BASE, TERMINAL ET SYSTÈME

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.04.2012 CN 201210125463**

(43) Date of publication of application:
**04.03.2015 Bulletin 2015/10**

(73) Proprietor: **ZTE Corporation
Shenzhen, Guangdong 518057 (CN)**

(72) Inventor: **HOU, Xiaohui
Shenzhen, Guangdong 518057 (CN)**

(74) Representative: **Zimmermann, Tankred Klaus et al
Schoppe, Zimmermann, Stöckeler
Zinkler, Schenk & Partner mbB
Patentanwälte
Radlkoferstrasse 2
81373 München (DE)**

(56) References cited:
**WO-A1-2009/096841    CN-A- 102 098 239
CN-A- 102 132 506    US-A1- 2010 081 445
US-A1- 2010 203 897**

- **MAHESH GUPTA VUTUKURI ET AL: "SAIC receiver algorithms for VAMOS downlink transmission", IEEE 8TH INTERNATIONAL SYMPOSIUM ON WIRELESS COMMUNICATION SYSTEMS (ISWCS 2011), 6 November 2011 (2011-11-06), pages 31-35, XP032090031, NY, USA DOI: 10.1109/ISWCS.2011.6125304 ISBN: 978-1-61284-403-9**
- **SAMSUNG ELECTRONICS CO: "Further discussion on diversity transmission for VAMOS", 3GPP DRAFT; GP-090119, vol. TSG GERAN WG1, no. 41, 17 February 2009 (2009-02-17), - 19 February 2009 (2009-02-19), XP050414568, Malta [retrieved on 2009-02-13]**
- **SAMSUNG: "TSC Evaluation Based on Complex Least-Square Channel Estimation for VAMOS", 3GPP DRAFT; GP-090312, vol. TSG GERAN WG1, no. 41, 17 February 2009 (2009-02-17), - 19 February 2009 (2009-02-19), XP050594361, Malta [retrieved on 2009-02-13]**

## Description

## Technical Field

The present invention relates to the field of communications, in particular to a method, NodeB, terminal and system for sending a signal.

## Background

The global system for mobile communication (GSM) is the largest mobile communication network in the world at present, there are various schemes to further improve the capacity of the circuit switch (CS) of a system For example, the evolution scheme for GSM in the CS region is voice services over adaptive multi-user channels on slot (VAMOS).

In the present VAMOS protocol, a downlink has two users on one time slot at the same time (in the further, more users may be included, such as 4 users), the two users are mutually interfered, only a baseband signal of the terminal is included in a signal sent by a network side to the terminal, and thus, a terminal cannot learn more information to determine the correlation between itself and another mobile terminal which multiplexes the same time slot as it. Further, for the terminal, it only knows the training sequence of the baseband signal used by itself, when channel estimation is performed, the training sequence is used to perform channel estimation; however, the method that the terminal performs channel estimation only according to its own baseband signal is unable to ensure the accuracy of channel estimation.

WO 2009/096841 A1 describes using an adaptive $\alpha$-QPSK modulation to transmit data, but does not disclose that the value of $\alpha$ is transmitted together with the data. A mapping unit generates the adaptive $\alpha$-QPSK constellation and maps the signals from modulators according to this constellation, but it does not transmit the constellation with the signals. Since the constellation is not sent to receiver with the data, the receiver is unable to directly obtain the value of $\alpha$ from the data receiver received and have to estimate it.

MAHESH GUPTA VUTUKURI ET AL: "SAIC receiver algorithm for VAMOS downlink transmission", IEEE 8TH INTERNATIONAL SYMPOSIUM ON WIRELESS COMMUNICATION SYSTEMS (ISWCS 2011), 6 November 2011 (2011-11-06), pages 31-35, XP032090031, NY, USA DOI: 10.1109/ISWCS.2011.6125304 ISBN: 978-1-61284-403-9 discloses some mathematical equations, but these equations are used for estimation of $\alpha$. It is not described that alpha Quadri Phase Shift Keying (AQPSK) modulated angle information can be added into signal sent to terminal together.

US 2010/081445 A1 describes that the link performance of legacy equipment may depend on its ability to decode a function of symbol rotation, and that it is the configuration and access parameters of the SDCCH resources and the possibility to support more than one burst per SDCCH timeslot that is made known through signaling to receiver, but not the symbol rotation. Symbol rotation is merely involved to determine the link performance of legacy equipment, is not added into any signal.

US 2010/203897 A1) merely discloses to determine the absolute value of power level with the Power Level Estimator, but does not disclose any information related to alpha Quadri Phase Shift Keying (AQPSK) modulated angle information, nor that alpha Quadri Phase Shift Keying (AQPSK) modulated angle information can be transmitted together with the signal to be sent.

SAMSUNG ELECTRONICS CO: "Further discussion on diversity transmission for VAMOS", 3GPP DRAFT; GP-090119, vol. TSG GERAN WG1, no. 41, 17 February 2009 (2009-02-17), - 19 February 2009 (2009-02-19), XP050414568, Malta merely discloses setting an additional diversity indicator to fulfill TCH diversity transmission in VAMOS, but does not disclose any information related to alpha Quadri Phase Shift Keying (AQPSK) modulated angle information that can be added into signals to be sent.

Summary

The present invention provides a method, NodeB, terminal and system for sending signal to solve the problem in the traditional art that only a baseband signal of the terminal is included in a signal sent by a network side to the terminal, and thus, a terminal cannot learn more information to determine the correlation between itself and another mobile terminal which multiplexes the same time slot as it.

According to one aspect of the present invention, a method according to independent claim 1 is provided and further detailed in the dependent claims referring back to said claim 1.

According to another aspect of the present invention, provided is a NodeB according to independent claim 6 and further detailed in the dependent claims referring back to said claim 6.

According to yet another aspect of the present invention, provided is a terminal according to independent claim 8 and further detailed in the dependent claims referring back to said claim 8.

According to still another aspect of the present invention, provided is a system according to independent claim 11.

Different information is added into a signal to be sent by a network side in the present invention, the terminal learns relevant information about another terminal which multiplexes the same time slot as it by adding different information so as to solve the problem in the traditional art that only a baseband signal of the terminal is included in signals sent by a network side to the terminal, and thus, a terminal cannot learn more information to determine the correlation between itself and another mobile terminal which multiplexes the same time slot as it, so that the terminal can learn more information about another mobile terminal which multiplexes the same time slot as it, thereby increasing the system performance.

**Brief Description of the Drawings**

Drawings, provided for further understanding of the present invention and forming a part of the specification, are used to explain the present invention which is defined by the appended claims and limited only by their scope. Any embodiment (of the invention) referred to in this description and not fully falling within the scope of said appended claims is to be interpreted as example useful for understanding the present invention. In the drawings:

Fig. 1 shows a flowchart of a method for sending signal according to an embodiment of the present invention;
Fig. 2 is a flow schematic diagram of the downlink channel estimation in a VAMOS system according to an embodiment of the present invention;
Fig. 3 is a structural block diagram of a NodeB according to an embodiment of the present invention;
Fig. 4 is a structural block diagram of a terminal according to an embodiment of the present invention; and
Fig. 5 is a structural schematic diagram of a system for receiving and sending signal according to an embodiment of the present invention.

**Detailed Description of the Embodiments**

The present invention is described below with reference to the accompanying drawings and embodiments in detail. Note that, the embodiments of the present invention and the features of the embodiments can be combined with each other if there is no conflict.

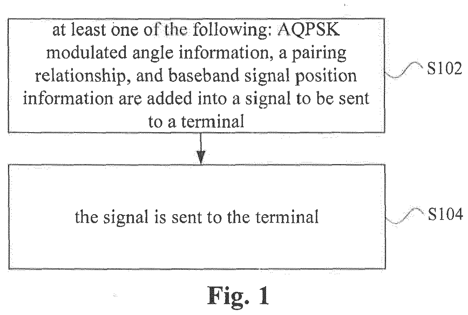

Based on the problem in the traditional art that only a baseband signal of the terminal is included in a signal sent by a network side to the terminal, and thus, a terminal cannot learn more information to determine the correlation between itself and another mobile terminal which multiplexes the same time slot as it, the embodiment of the present invention provides a method for sending signal, the flow of the method is as shown in Fig. 1, comprising steps S102-S104:

step S102, at least one of the following: AQPSK modulated angle information, a pairing relationship, and baseband signal position information are added into a signal to be sent to a terminal, the AQPSK modulated angle information being used for indicating a relative power relationship between terminals which multiplex the same time slot, the pairing relationship being used for indicating the corresponding training sequences of the terminals which multiplex the same time slot, and the baseband signal position information being used for indicating that the baseband signal of the terminals which multiplex the same time slot are located in a real part position or an imaginary part position; and step S104, the signal is sent to the terminal.

Different information is added into a signal to be sent by a network side in the present embodiment, the terminal learns relevant information about another terminal which multiplexes the same time slot as it by adding different information so as to solve the problem in the traditional art that only a baseband signal of the terminal is included in a signal sent by a network side to the terminal, and thus, a terminal cannot learn more information to determine the correlation between itself and another mobile terminal which multiplexes the same time slot as it, so that the terminal can learn more information about another mobile terminal which multiplexes the same time slot as it, thereby increasing the system performance.

In the implementation process, the signal sent by the network side may be a baseband signal, and may be a specific signal. when the issued signal is a baseband signal, the baseband signal to be sent may be sent according to the formula $r=\cos(\alpha)\mathbf{A}\mathbf{h}+\sin(\alpha)\mathbf{B}\mathbf{h}+\omega$, where $\alpha$ is the AQPSK modulated angle, $\mathbf{A}$ is a baseband signal matrix of one terminal which multiplexes the same time slot, $\mathbf{B}$ is a baseband signal matrix of another terminal which multiplexes the same time slot, $\mathbf{h}$ is a matrix of a channel impulse response tap, and $\omega$ is noise.

When the above-mentioned three kinds of information is added in a signal at the same time, after the signal is sent to a terminal, the terminal performs the following steps on the signal in which the above-mentioned three kinds of information is added:

(1) a signal from a network side is received;
(2) a channel matrix is determined according to the AQPSK modulated angle information, the pairing relationship, and the baseband signal position information which are carried in the signal; and

(3) channel estimation is performed according to the signal and the channel matrix.

The step (1) is a basic process in which the signal from the network side is received. In the step (2), the channel matrix may be user-defined. For example, the channel matrix is defined to be S, wherein $\mathbf{s}=\cos(\alpha)\mathbf{A}+\sin(\alpha)\mathbf{B}$, the angle information and the pairing relationship, these two physical parameters, together determine the matrix $\mathbf{S}$, where, $\alpha$ is the AQPSK modulated angle, $\mathbf{A}$ is a baseband signal matrix of one terminal which multiplexes the same time slot, and $\mathbf{B}$ is a baseband signal matrix of another terminal which multiplexes the same time slot.

After the step (2) is ended, the channel matrix $\mathbf{S}$ is obtained, the step (3) is performed to perform channel estimation. The formula of channel estimation is $\mathbf{h}=(\mathbf{S^H S})^{-1}\mathbf{S^H r}$, where $\mathbf{S}$ is the channel matrix, and $\mathbf{r}$ is a signal matrix.

By means of the above-mentioned steps, the terminal side obtains the channel estimation $\mathbf{h}$ which may be used for the subsequent demodulation process.

The above-mentioned method is described in combination to the accompanying drawings and the preferred embodiment in detail hereafter.

Preferred embodiment

The present preferred embodiment is described by taking a VAMOS system as an example, in the system, the receiving side is a mobile terminal.

In the present VAMOS protocol, the network is not responsible to notify a mobile phone of the relative power relationship, the pairing relationship of the training sequence, etc. of the two users in the present channel; therefore, for the mobile phone, it only knows the training sequence $a_n$ used by itself and does not know the training sequence $b_n$ of a mobile phone paired with the mobile phone and a AQPSK modulated value $\alpha$; or it only knows the training sequence $b_n$ used by itself and does not know the training sequence $a_n$ of a mobile phone paired with the mobile phone and a AQPSK modulated value $\alpha$. More information is unable to be obtained; therefore, when channel estimation is performed, more information is not allowed to be used to better perform channel estimation, so that the accuracy of channel estimation is reduced, thereby directly affecting the demodulation performance of the base band.

A downlink baseband signal sent by the existing NodeB may be determined by the formula (1-1) as shown as follows:

$$r(n) = \cos(\alpha)\sum_{k=0}^{L} h(k)a(n-k) + j\sin(\alpha)\sum_{k=0}^{L} h(k)b(n-k) + \omega_n$$

$$(1-1)$$

where r(n) is a downlink baseband signal received by a mobile phone, $\alpha$ is an AQPSK modulated angle, $h(k)$ is a channel impulse response tap, $a(n)$ is a baseband signal of one user in the VAMOS, $b(n)$ is a baseband signal of another user in the VAMOS, $b(n)$ is interference or noise, and L is an integer which is less than n.

Accordingly, a downlink baseband signal received by a mobile phone also may be written as the form of the formula (1-1), i.e., the downlink baseband signal may be received according to the above-mentioned formula; however, in the step of receiving the signal, the terminal only may determine the training sequence $a_n$ according to its known information and cannot obtain other information.

Based on the above-mentioned problem, in the present preferred embodiment, before issuing a signal, the network side adds the AQPSK modulated angle information, the pairing relationship, and the baseband signal position information into the signal, wherein the signal to be sent may be a baseband signal and also may be a specific message issued on a specific channel. For example, for a mobile phone to which a TCH channel is distributed, when it is used as a paired object (which is another mobile terminal which multiplexes the same time slot), a specific message may be issued on a slow associated control channel (SACCH). If a switch is required, a similar message may be issued on a fast associated control channel (FACCH) to realize.

The present preferred embodiment is a process that the mobile terminal performs a process on the signal into which the above-mentioned three kinds of information is added, the accuracy of channel estimation is seriously inspected; therefore, only the training sequence part in the received signal are processed. Of course, it also may be that only a signal into which at least a kind of information is added is received, for example, for a signal into which the baseband signal position information is added, the position relationship of the baseband signals of all the mobile terminals which multiplex the same time slot may be determined by the above-mentioned information, etc. thereby needing no further description herein.

For a simple process, the received signal may be written to be a vector form: r = $\cos(\alpha)\mathbf{Ah} + \sin(\alpha)\mathbf{Bh} + \omega$,

where $\mathbf{h} = (h(0)\ h(1)\ \cdots\ h(L))^T$, $\omega$ is noise,

$$\mathbf{A} = \begin{pmatrix} a_L & a_{L-1} & \cdots & a_0 \\ \vdots & \vdots & \vdots & \vdots \\ \vdots & \vdots & \vdots & \vdots \\ \vdots & \vdots & \vdots & \vdots \\ a_{26} & a_{25} & \cdots & a_{26-L} \end{pmatrix}, \quad \mathbf{B} = j\begin{pmatrix} b_L & b_{L-1} & \cdots & b_0 \\ \vdots & \vdots & \vdots & \vdots \\ \vdots & \vdots & \vdots & \vdots \\ \vdots & \vdots & \vdots & \vdots \\ b_{26} & b_{25} & \cdots & b_{26-L} \end{pmatrix}.$$

Only three information fields are added when the network issues an assignment command. The three information fields includes the relative power relationship which may be converted by $\alpha$, the pairing relationship which is namely knowing training sequences $a_n$ and $b_n$ at the same time, and the baseband signal which is located at a real part position I or an imaginary part position Q.

Preferably, for a mobile phone to which a TCH channel is distributed, only a specific message is issued on SACCH when it is used as a paired object, wherein the message thereof includes three information fields, i.e., the relative power relationship which may be converted by $\alpha$; the pairing relationship which is namely knowing training sequences $a_n$ and $b_n$ at the same time; and the baseband signal which is located at a real part position I or an imaginary part position Q.

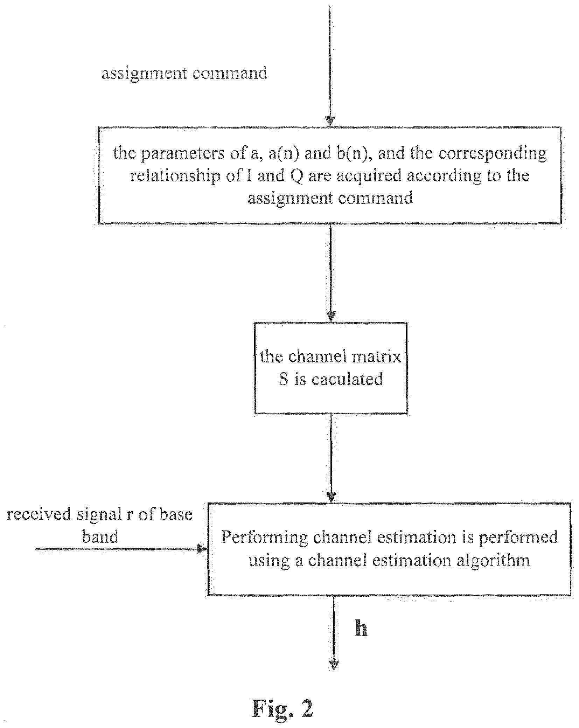

Fig. 2 is a flow schematic diagram that a mobile terminal performs channel estimation after receiving a signal sent by the NodeB. After obtaining the above information, channel estimation may be performed according to criteria such as LS and LMMSE, the method for channel estimation is not defined herein.

Before channel estimation is performed, a channel matrix is required. In the process of determining the channel matrix, assuming $\mathbf{S} = \cos(\alpha)\mathbf{A} + \sin(\alpha)\mathbf{B}$, the channel estimation under the LS criterion may be $\mathbf{h} = (\mathbf{S}^H\mathbf{S})^{-1}\ \mathbf{S}^H\mathbf{r}$.

This method may accurately estimate the impulse response of a channel and accurately perform channel estimation of a downlink channel under the VAMOS condition.

The following is described when the number of the mobile terminals which multiplex the same time slot is two.

When the network side allocates two mobile terminals (mobile phones) $MS_0$ and $MS_1$ to the same one TCH channel, the $MS_0$ and $MS_1$ are notified respectively by an assignment command on a stand-alone dedicated control channel (SDCCH); The relative power relationship may be converted by $\alpha$, i.e., $\cos(\alpha)/\sin(\alpha)$; the pairing relationship is used for determining training sequences $a_n$ and $b_n$ at the same time according to indicated information; and the position relationship of a real part and an imaginary part is used for indicating that the respective baseband signals of the mobile terminal itself and another mobile terminal which multiplexes the same time slot as it are located at a real part position I or an imaginary part position Q.

$MS_0$ computes the matrix $S$ according to the obtained information, wherein $\mathbf{S} = \cos(\alpha)\mathbf{A} + \sin(\alpha)\mathbf{B}$. The channel impulse response $\tilde{\mathbf{h}}_0$ of a channel where a user 0 is located is obtained using channel estimation algorithms such as LS; when the LS criterion is used, $\tilde{\mathbf{h}}_0 = (\mathbf{S}^H\mathbf{S})^{-1}\mathbf{S}^H\mathbf{r}_0$, and the following demodulation of $MS_0$ may be performed based on channel estimation $\tilde{\mathbf{h}}_0$.

$MS_1$ computes the matrix $S$ according to the obtained information, wherein $\mathbf{S} = \cos(\alpha)\mathbf{A} + \sin(\alpha)\mathbf{B}$, and the channel impulse response $\tilde{\mathbf{h}}_1$ of a channel where a user 1 is located is obtained using channel estimation algorithms such as LS; when the LS criterion is used, $\tilde{\mathbf{h}}_1 = (\mathbf{S}^H\mathbf{S})^{-1}\mathbf{S}^H\mathbf{r}_1$, and the following demodulation of $MS_1$ may be performed based on channel estimation $\tilde{\mathbf{h}}_1$.

In the embodiment, the mobile terminal may know information about the pairing relationship of the training sequences and the relative power relations of two users during demodulation, and channel estimation may be performed according to the above-mentioned information so as to further improve the accuracy of the channel estimation.

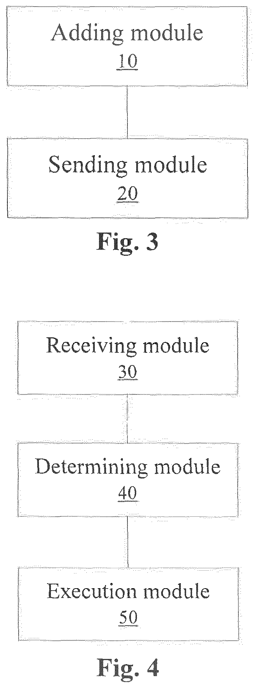

The embodiment of the present invention also provides a NodeB, the structural block diagram of the NodeB is as shown in Fig. 3, comprising an adding module **10**, configured to add into a signal to be sent to a terminal at least one of the following: AQPSK modulated angle information, a pairing relationship, and baseband signal position information, the AQPSK modulated angle information being used for indicating the relative power relationship between terminals which multiplex the same time slot, the pairing relationship being used for indicating the corresponding training sequence of the terminals which multiplex the same time slot, and the baseband signal position information being used for indicating that the baseband signals of the terminals which multiplex the same time slot is located in a real part position or an imaginary part position; and a sending module **20**, coupled to the adding module **10** and configured to send the signal to the terminal.

In the implementation process, the baseband signal sent by the sending module **20** is $\mathbf{r} = \cos(\alpha)\mathbf{A}\mathbf{h} + \sin(\alpha)\mathbf{B}\mathbf{h} + \omega$, wherein $\alpha$ is the AQPSK modulated angle, **A** is a baseband signal matrix of one terminal which multiplexes the same time slot, **B** is a baseband signal matrix of another terminal which multiplexes the same time slot, **h** is a matrix of a channel impulse response tap, and $\omega$ is noise.

For the above-mentioned NodeB which is sending the signal, the embodiment of the present invention also provides a terminal which is configured to receive the signal sent by the above-mentioned NodeB and performs corresponding process on the above-mentioned signal. The terminal comprises a receiving module **30**, a determining module **40** and execution module **50** as shown in Fig. 4.

The receiving module **30** is configured to receive a signal which is from the NodeB and carries AQPSK modulated angle information, a pairing relationship and baseband signal position information, wherein the AQPSK modulated angle information is used for indicating the relative power relationship between terminals which multiplex the same time slot, the pairing relationship is used for indicating the corresponding training sequences of the terminals which multiplex the same time slot, and the baseband signal position information is used for indicating that the baseband signal of the terminal which multiplex the same time slot is located in a real part position or an imaginary part position; the determining module **40** is coupled to the receiving module **30** and is configured to determine a channel matrix according to the AQPSK modulated angle information, the pairing relationship, and the baseband signal position information; and the execution module **50** is coupled to the determining module **40** and is configured to perform channel estimation according to the signal and the channel matrix.

The determined channel matrix of the above-mentioned terminal is $\mathbf{S}=\cos(\alpha)\mathbf{A}+\sin(\alpha)\mathbf{B}$, where $\alpha$ is the AQPSK modulated angle, $\mathbf{A}$ is a baseband signal matrix of one terminal which multiplexes the same time slot, and $\mathbf{B}$ is a baseband signal matrix of another terminal which multiplexes the same time slot. The channel estimation is $\mathbf{h}=(\mathbf{S}^H\mathbf{S})^{-1}\mathbf{S}^H\mathbf{r}$, where $\mathbf{S}$ is the channel matrix, and $\mathbf{r}$ is a matrix of the signal.

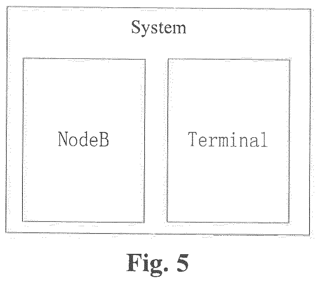

The embodiment of the present invention also provides a system for receiving and sending system, as shown in Fig. 5, i.e., the system comprises the above-mentioned NodeB and terminal, wherein the terminal may be achieved by a mobile terminal.

Only when the signal sent by the NodeB in the above-mentioned system is a signal in which more information is added, the terminal on a receiving side may receive more information, and the terminal may be changed correspondingly.

From the description above, it can be seen that the present invention achieves the following technique effects: Different information is added into a signal to be sent by a network side in the present embodiment, the terminal obtains relevant information about another terminal which multiplexes the same time slot as it by adding different information so as to solve the problem in the traditional art that only a baseband signal of the terminal is included in signals sent by a network side to the terminal, and thus, a terminal cannot learn more information to determine the correlation between itself and another mobile terminal which multiplexes the same time slot as it, so that the terminal may learn more information about another mobile terminal which multiplexes the same time slot as it, thereby increasing the system performance.

Obviously, those skilled in the art should know that each of the mentioned modules or steps of the present invention can be realized by universal computing devices; the modules or steps can be focused on single computing device, or distributed on the network formed by multiple computing devices; selectively, they can be realized by the program codes which can be executed by the computing device; thereby, the modules or steps can be stored in the storage device and executed by the computing device; and under some circumstances, the shown or described steps can be executed in different orders, or can be independently manufactured as each integrated circuit module, or multiple modules or steps thereof can be manufactured to be single integrated circuit module, thus to be realized. In this way, the present invention is not restricted to any particular hardware and software combination.

The descriptions above are only the preferable embodiment of the present invention, which are not used to restrict the present invention, the scope of which is determined only by the scope of the appended claims.

**Claims**

**1.** A method for sending a signal, said method comprising:

adding (S102) alpha Quadri Phase Shift Keying, AQPSK, modulated angle information, a pairing relationship, and baseband signal position information into said signal to be sent to a terminal, the AQPSK modulated angle information being used for indicating a relative power relationship between terminals including said terminal to which the signal is sent and which multiplex the same time slot, the pairing relationship being used for indicating corresponding training sequences of said terminals which multiplex said same time slot, and the baseband signal position information being used for indicating that baseband signals of said terminals which multiplex said same time slot are located in a real part position or an imaginary part position of the constellation used for said baseband signals; and
sending (S104) the signal to the terminal.

**2.** The method according to claim 1, wherein after sending (S102) the signal, which carries the AQPSK modulated angle information, the pairing relationship, and the baseband signal position information, to the terminal, the method further comprises:

determining by the terminal a channel matrix according to the AQPSK modulated angle information, the pairing relationship, and the baseband signal position information which are carried in the signal; and
performing by the terminal a channel estimation based on the received signal and the channel matrix.

3. The method according to claim 2, wherein the step of determining by the terminal the channel matrix according to the AQPSK modulated angle information, the pairing relationship, and the baseband signal position information which are carried in the signal comprises: determining the channel matrix $\mathbf{S}$ using the equation: $\mathbf{S}=\cos(\alpha)\mathbf{A}+\sin(\alpha)\mathbf{B}$ where $\alpha$ is an AQPSK modulated angle, $\mathbf{A}$ is a baseband signal matrix of said terminal, and $\mathbf{B}$ is a baseband signal matrix of another terminal which multiplexes the same time slot as said terminal.

4. The method according to claim 3, wherein the step of performing by the terminal the channel estimation according to the signal and the channel matrix comprises: determining the channel estimation $\mathbf{h}$ using the equation: $\mathbf{h}=(\mathbf{S}^{H}\mathbf{S})^{-1}\mathbf{S}^{H}\mathbf{r}$, wherein $\mathbf{S}$ is the channel matrix, and $\mathbf{r}$ is a matrix of the signal received by said terminal.

5. The method according to any one of claims 1 to 4, wherein the baseband signal r is represented by: $\mathbf{r}=\cos(\alpha)\mathbf{Ah}+\sin(\alpha)\mathbf{Bh}+\omega$, wherein $\alpha$ is the AQPSK modulated angle, $\mathbf{A}$ is a baseband signal matrix of said terminal, $\mathbf{B}$ is a baseband signal matrix of another terminal which multiplexes the same time slot as said terminal, $\mathbf{h}$ is a matrix of a channel impulse response tap of the channel over which the signal is transmitted to said terminal, and $\omega$ is noise.

6. A NodeB configured to send a signal, said NodeB comprising:

an adding module (10), configured to add alpha Quadri Phase Shift Keying, AQPSK, modulated angle information, a pairing relationship, and baseband signal position information into a signal to be sent to a terminal, the AQPSK modulated angle information being used for indicating a relative power relationship between terminals including said terminal which multiplex the same time slot, the pairing relationship being used for indicating corresponding training sequences of said terminals which multiplex the same time slot, and the baseband signal position information being used for indicating that the baseband signals of said terminals which multiplex said same time slot are located in a real part position or an imaginary part position of the constellation used for said baseband signals, and
a sending module (20), configured to send the signal to the terminal.

7. The NodeB according to claim 6, wherein the baseband signal sent by the sending module (20) is represented by: $\mathbf{r}=\cos(\alpha)\mathbf{Ah}+\sin(\alpha)\mathbf{Bh}+\omega$, wherein $\alpha$ is the AQPSK modulated angle, $\mathbf{A}$ is a baseband signal matrix of said terminal, $\mathbf{B}$ is a baseband signal matrix of another terminal which multiplexes the same time slot as said terminal, $\mathbf{h}$ is a matrix of a channel impulse response tap of the channel over which the signal is transmitted to said terminal, and $\omega$ is noise.

8. A terminal configured to receive a signal, said terminal comprising:

a receiving module (30), configured to receive a signal from a NodeB, said signal carrying alpha Quadri Phase Shift Keying, AQPSK, modulated angle information, a pairing relationship and baseband signal position information, wherein the AQPSK modulated angle information is used for indicating the relative power relationship between terminals including said terminal which multiplex the same time slot, the pairing relationship is used for indicating corresponding training sequences of said terminals which multiplex said same time slot, and the baseband signal position information is used for indicating that the baseband signals of said terminals which multiplex said same time slot are located in a real part position or an imaginary part position of the constellation used for said baseband signals;
a determining module (40), configured to determine a channel matrix according to the AQPSK modulated angle information, the pairing relationship, and the baseband signal position information; and
an execution module (50), configured to perform a channel estimation based on the received signal and the channel matrix.

9. A terminal according to claim 8, wherein the channel matrix S is determined using the equation: $\mathbf{S}=\cos(\alpha)\mathbf{A}+\sin(\alpha)\mathbf{B}$, wherein $\alpha$ is the AQPSK modulated angle, $\mathbf{A}$ is a the baseband signal matrix of said terminal, $\mathbf{B}$ is a baseband signal matrix of another terminal which multiplexes the same time slot as said terminal.

10. The terminal according to claim 9, wherein the channel estimation **h** is determined using the equation: **h**=(**S**$^H$**S**)$^{-1}$**SHr**, wherein **S** is the channel matrix, and r is a matrix of the received signal.

11. A system comprising the NodeB according to any one of claims 6 to 7 and the terminal according to any one of claims 8 to 10.

**Patentansprüche**

1. Ein Verfahren zum Senden eines Signals, wobei das Verfahren folgende Schritte aufweist:

Hinzufügen (S102) von AQPSK-modulierten Winkelinformationen (AQPSK = alpha Quadri Phase Shift Keying = Alpha-Quadraturphasenumtastung), einer Paarungsbeziehung und Basisbandsignalpositionsinformationen zu dem Signal, das an einen Anschluss zu senden ist, wobei die AQPSK-modulierten Winkelinformationen zum Anzeigen einer relativen Leistungsbeziehung zwischen Anschlüssen verwendet werden, die den Anschluss umfassen, an den das Signal gesendet wird, und die den gleichen Zeitschlitz multiplexen, wobei die Paarungsbeziehung zum Anzeigen entsprechender Trainingssequenzen der Anschlüsse verwendet wird, die den gleichen Zeitschlitz multiplexen, und die Basisbandsignalpositionsinformationen, die zum Anzeigen der Basisbandsignale der Anschlüsse verwendet werden, die den gleichen Zeitschlitz multiplexen, in einer Realteilposition oder einer Imaginärteilposition der Konstellation angeordnet sind, die für die Basisbandsignale verwendet wird; und Senden (S104) des Signals an den Anschluss.

2. Das Verfahren gemäß Anspruch 1, wobei das Verfahren nach dem Senden (S102) des Signals, das die AQPSK-modulierten Winkelinformationen, die Paarungsbeziehung und die Basisbandsignalpositionsinformationen trägt, an den Anschluss, ferner folgende Schritte umfasst:

Bestimmen, durch den Anschluss, einer Kanalmatrix gemäß den AQPSK-modulierten Winkelinformationen, der Paarungsbeziehung und den Basisbandsignalpositionsinformationen, die in dem Signal getragen werden; und Durchführen, durch den Anschluss, einer Kanalschätzung basierend auf dem empfangenen Signal und der Kanalmatrix.

3. Das Verfahren gemäß Anspruch 2, bei dem der Schritt des Bestimmens, durch den Anschluss, der Kanalmatrix gemäß den AQPSK-modulierten Winkelinformationen, der Paarungsbeziehung und der Basisbandsignalpositionsinformationen, die in dem Signal getragen werden, folgenden Schritt aufweist:
Bestimmen der Kanalmatrix **S** unter Verwendung der Gleichung: **S**=cos($\alpha$)**A**+sin($\alpha$)**B,** wobei $\alpha$ ein AQPSK-modu-lierter Winkel ist, **A** eine Basisbandsignalmatrix des Anschlusses ist und **B** eine Basisbandsignalmatrix eines anderen Anschlusses ist, der den gleichen Zeitschlitz multiplext wie der Anschluss.

4. Das Verfahren gemäß Anspruch 3, bei dem der Schritt des Durchführens, durch den Anschluss, der Kanalschätzung gemäß dem Signal und der Kanalmatrix folgenden Schritt aufweist:
Bestimmen der Kanalschätzung **h** unter Verwendung der Gleichung: **h** = (**S**$^H$**S**)$^{-1}$**S**$^H$**r**, wobei **S** die Kanalmatrix ist und **r** eine Matrix des Signals ist, das durch den Anschluss empfangen wird.

5. Das Verfahren gemäß einem der Ansprüche 1 bis 4, bei dem das Basisbandsignal r dargestellt ist durch: **r**= cos($\alpha$)**Ah**+sin($\alpha$)**Bh**+$\omega$, wobei $\alpha$ der AQPSK-modulierte Winkel ist, **A** eine Basisbandsignalmatrix des Anschlusses ist, **B** eine Basisbandsignalmatrix eines anderen Anschlusses ist, der den gleichen Zeitschlitz multiplext wie der Anschluss, **h** eine Matrix eines Kanalimpulsantwortabgriffs des Kanals ist, über den das Signal an den Anschluss übertragen wird, und $\omega$ Rauschen ist.

6. Ein KnotenB, der konfiguriert ist, um ein Signal zu senden, wobei der KnotenB folgende Merkmale aufweist:

ein Hinzufügemodul (10), das konfiguriert ist, um AQPSK-modulierte Winkelinformationen (AQPSK = alpha Quadri Phase Shift Keying = Alpha-Quadraturphasenumtastung), eine Paarungsbeziehung und Basisbandsignalpositionsinformationen zu einem Signal hinzuzufügen, das an einen Anschluss zu senden ist, wobei die AQPSK-modulierten Winkelinformationen zum Anzeigen einer relativen Leistungsbeziehung zwischen Anschlüssen verwendet werden, die den Anschluss umfassen, die den gleichen Zeitschlitz multiplexen, wobei die Paarungsbeziehung zum Anzeigen entsprechender Trainingssequenzen der Anschlüsse verwendet wird, die den gleichen Zeitschlitz multiplexen, und die Basisbandpositionsinformationen, die zum Anzeigen der Basisbandsignale der Anschlüsse verwendet werden, die den gleichen Zeitschlitz multiplexen, in einer Realteilposition oder in einer Imaginärteilposition der Konstellation angeordnet sind, die für die Basisbandsignale verwendet wird, und

ein Sendemodul (20), das konfiguriert ist, um das Signal an den Anschluss zu senden.

**7.** Der KnotenB gemäß Anspruch 6, bei dem das Basisbandsignal, das durch das Sendemodul (20) gesendet wird, dargestellt ist durch:

**r**= $\cos(\alpha)$**Ah**+$\sin(\alpha)$**Bh**+$\omega$, wobei $\alpha$ der AQPSK-modulierte Winkel ist, **A** eine Basisbandsignalmatrix des Anschlusses ist, **B** eine Basisbandsignalmatrix eines anderen Anschlusses ist, der den gleichen Zeitschlitz multiplext wie der Anschluss, **h** eine Matrix eines Kanalimpulsantwortabgriffs des Kanals ist, über den das Signal an den Anschluss übertragen wird, und $\omega$ Rauschen ist.

**8.** Ein Anschluss, der konfiguriert ist, um ein Signal zu empfangen, wobei der Anschluss folgende Merkmale aufweist:

ein Empfangsmodul (30), das konfiguriert ist, um ein Signal von dem KnotenB zu empfangen, wobei das Signal AQPSK-modulierte Winkelinformationen (AQPSK = alpha Quadri Phase Shift Keying = Alpha-Quadraturphasenumtastung), eine Paarungsbeziehung und Basisbandsignalpositionsinformationen trägt, wobei die AQPSK-modulierten Winkelinformationen zum Anzeigen der relativen Leistungsbeziehung zwischen Anschlüssen verwendet werden, die den Anschluss umfassen, die den gleichen Zeitschlitz multiplexen, wobei die Paarungsbeziehung zum Anzeigen entsprechender Trainingssequenzen der Anschlüsse verwendet wird, die den gleichen Zeitschlitz multiplexen, und die Basisbandsignalpositionsinformationen, die zum Anzeigen der Basisbandsignale der Anschlüsse verwendet werden, die den gleichen Zeitschlitz multiplexen, in einer Realteilposition oder einer Imaginärteilposition der Konstellation angeordnet sind, die für die Basisbandsignale verwendet wird;
ein Bestimmungsmodul (40), das konfiguriert ist, um eine Kanalmatrix gemäß den AQPSK-modulierten Winkelinformationen, der Paarungsbeziehung und der Basisbandsignalpositionsinformationen zu bestimmen; und
ein Ausführungsmodul (50), das konfiguriert ist, um basierend auf dem empfangenen Signal und der Kanalmatrix eine Kanalschätzung durchzuführen.

**9.** Ein Anschluss gemäß Anspruch 8, bei dem die Kanalmatrix **S** bestimmt wird unter Verwendung der Gleichung: **S**=$\cos(\alpha)$**A**+$\sin(\alpha)$**B,** wobei $\alpha$ der AQPSK-modulierte Winkel ist, **A** die Basisbandsignalmatrix des Anschlusses ist, **B** eine Basisbandsignalmatrix eines anderen Anschlusses ist, der den gleichen Zeitschlitz multiplext wie der Anschluss.

**10.** Der Anschluss gemäß Anspruch 9, bei dem die Kanalschätzung **h** unter Verwendung der Gleichung: **h** = $(\mathbf{S}^H\mathbf{S})^{-1}\mathbf{S}^H\mathbf{r}$, bestimmt wird, wobei **S** die Kanalmatrix ist und r eine Matrix des empfangenen Signals ist.

**11.** Ein System, das den KnotenB gemäß einem der Ansprüche 6 bis 7 und den Anschluss gemäß einem der Ansprüche 8 bis 10 aufweist.

## Revendications

**1.** Procédé d'envoi d'un signal, ledit procédé comprenant le fait de:

ajouter (S102) une information d'angle modulé de Déplacement de Phase en Quadri-Phase alpha, AQPSK, un rapport de couplage et une information de position de signal de bande de base audit signal à envoyer à un terminal, l'information d'angle modulé AQPSK étant utilisée pour indiquer un rapport de puissance relative entre terminaux, y compris ledit terminal, auxquels est envoyé le signal et qui multiplexent le même intervalle de temps, le rapport de couplage étant utilisé pour indiquer les séquences d'apprentissage correspondantes desdits terminaux qui multiplexent ledit même intervalle de temps, et l'information de position de signal de bande de base étant utilisée pour indiquer que les signaux de bande de base desdits terminaux qui multiplexent ledit même intervalle de temps se trouvent à une position de partie réelle ou à une position de partie imaginaire de la constellation utilisée pour lesdits signaux de bande de base; et
envoyer (S104) le signal au terminal.

**2.** Procédé selon la revendication 1, dans lequel, après l'envoi (S102) du signal qui porte l'information d'angle modulé AQPSK, du rapport de couplage et de l'information de position du signal de bande de base au terminal, le procédé comprend par ailleurs le fait de:

> déterminer, par le terminal, une matrice de canal selon l'information d'angle modulé AQPSK, le rapport de couplage et l'information de position du signal de bande de base qui sont portés dans le signal; et
>
> effectuer, par le terminal, une estimation de canal sur base du signal reçu et de la matrice de canal.

3. Procédé selon la revendication 2, dans lequel l'étape consistant à déterminer, par le terminal, la matrice de canal selon l'information d'angle modulé AQPSK, le rapport de couplage et l'information de position de signal de bande de base portés dans le signal comprend le fait de:
déterminer la matrice de canal $S$ à l'aide de l'équation: $S = \cos(\alpha)A + \sin(\alpha)B$, où a est un angle modulé AQPSK, $A$ est une matrice de signal de bande de base dudit terminal et $B$ est une matrice de signal de bande de base d'un autre terminal qui multiplexe le même intervalle de temps que ledit terminal.

4. Procédé selon la revendication 3, dans lequel l'étape consistant à effectuer, par le terminal, l'estimation de canal selon le signal et la matrice de canal comprend le fait de:
déterminer l'estimation de canal $h$ à l'aide de l'équation:
$h = (S^H S)^{-1} S^H r$, où $S$ est la matrice de canal et $r$ est une matrice du signal reçu par ledit terminal.

5. Procédé selon l'une quelconque des revendications 1 à 4, dans lequel le signal de bande de base $r$ est représenté par:
$r = \cos(\alpha)Ah + \sin(\alpha)Bh + \omega$, où $\alpha$ est l'angle modulé AQPSK, $A$ est une matrice de signal de bande de base dudit terminal, $B$ est une matrice de signal de bande de base d'un autre terminal qui multiplexe le même intervalle de temps que ledit terminal, $h$ est une matrice d'une prise de réponse impulsionnelle du canal par lequel le signal est transmis audit terminal, et $\omega$ est le bruit.

6. NoeudB configuré pour envoyer un signal, ledit NoeudB comprenant:

> un module d'addition (10) configuré pour ajouter une information d'angle modulé de Déplacement de Phase en Quadri-Phase alpha, AQPSK, un rapport de couplage et une information de position de signal de bande de base à un signal à envoyer à un terminal, l'information d'angle modulé AQPSK étant utilisée pour indiquer un rapport de puissance relative entre les terminaux, y compris ledit terminal, qui multiplexent le même intervalle de temps, le rapport de couplage étant utilisé pour indiquer les séquences d'apprentissage correspondantes desdits terminaux qui multiplexent le même intervalle de temps, et l'information de position de signal de bande de base étant utilisée pour indiquer que les signaux de bande de base desdits terminaux qui multiplexent ledit même intervalle de temps se trouvent à une position de partie réelle ou à une position de partie imaginaire de la constellation utilisée pour lesdits signaux de bande de base, et
> un module d'envoi (20) configuré pour envoyer le signal au terminal.

7. NoeudB selon la revendication 6, dans lequel le signal de bande de base envoyé par le module d'envoi (20) est représenté par:
$r = \cos(\alpha)Ah + \sin(\alpha)Bh + \omega$, où $\alpha$ est l'angle modulé AQPSK, $A$ est une matrice de signal de bande de base dudit terminal, $B$ est une matrice de signal de bande de base d'un autre terminal qui multiplexe le même intervalle de temps que ledit terminal, $h$ est une matrice d'une prise de réponse impulsionnelle du canal par lequel le signal est transmis audit terminal, et $\omega$ est le bruit.

8. Terminal configuré pour recevoir un signal, ledit terminal comprenant:

> un module de réception (30) configuré pour recevoir un signal du NoeudB, ledit signal portant une information d'angle modulé de Déplacement de Phase en Quadri-Phase alpha, AQPSK, un rapport de couplage et une information de position de signal de bande de base, où l'information d'angle modulé AQPSK est utilisée pour indiquer le rapport de puissance relative entre les terminaux, y compris ledit terminal, qui multiplexent le même intervalle de temps, le rapport de couplage est utilisé pour indiquer les séquences d'apprentissage correspondantes desdits terminaux qui multiplexent ledit même intervalle de temps, et l'information de position de signal de bande de base est utilisée pour indiquer que les signaux de bande de base desdits terminaux qui multiplexent ledit même intervalle de temps se trouvent à une position de partie réelle ou à une position de partie imaginaire de la constellation utilisée pour lesdits signaux de bande de base;
> un module de détermination (40) configuré pour déterminer une matrice de canal selon l'information d'angle modulé AQPSK, le rapport de couplage et l'information de position de signal de bande de base; et
> un module d'exécution (50) configuré pour effectuer une estimation de canal sur base du signal reçu et de la matrice de canal.

9. Terminal selon la revendication 8, dans lequel la matrice de canal **S** est déterminée à l'aide de l'équation:
$\mathbf{S} = \cos(\alpha)\mathbf{A} + \sin(\alpha)\mathbf{B}$, où $\alpha$ est l'angle modulé AQPSK, **A** est la matrice de signal de bande de base dudit terminal, **B** est une matrice de signal de bande de base d'un autre terminal qui multiplexe le même intervalle de temps que ledit terminal.

10. Terminal selon la revendication 9, dans lequel l'estimation de canal h est déterminée à l'aide de l'équation:
$\mathbf{h} = (\mathbf{S}^{H}\mathbf{S})^{-1}\mathbf{S}^{H}\mathbf{r}$, où **S** est la matrice de canal et **r** est une matrice du signal reçu.

11. Système comprenant le NoeudB selon l'une quelconque des revendications 6 à 7 et le terminal selon l'une quelconque des revendications 8 à 10.

at least one of the following: AQPSK modulated angle information, a pairing relationship, and baseband signal position information are added into a signal to be sent to a terminal — S102

the signal is sent to the terminal — S104

**Fig. 1**

assignment command

the parameters of a, a(n) and b(n), and the corresponding
relationship of I and Q are acquired according to the
assignment command

the channel matrix
S is caculated

received signal r of base
band

Performing channel estimation is performed
using a channel estimation algorithm

**h**

**Fig. 2**

Adding module
10

Sending module
20

**Fig. 3**

Receiving module
30

Determining module
40

Execution module
50

**Fig. 4**

**Fig. 5**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2009096841 A1
- US 2010081445 A1
- US 2010203897 A1

**Non-patent literature cited in the description**

- **MAHESH GUPTA VUTUKURI et al.** SAIC receiver algorithm for VAMOS downlink transmission. *IEEE 8TH INTERNATIONAL SYMPOSIUM ON WIRELESS COMMUNICATION SYSTEMS (ISWCS 2011),* 06 November 2011, ISBN 978-1-61284-403-9, 31-35
- Further discussion on diversity transmission for VAMOS. 3GPP DRAFT; GP-090119. SAMSUNG ELECTRONICS CO, 17 February 2009